# EUROPÄISCHE PATENTANMELDUNG

(11) **EP 2 682 287 A1**
(43) Veröffentlichungstag der Anmeldung: **08.01.2014**
(21) Anmeldenummer: 12174785.1
(22) Anmeldetag: 03.07.2012
(51) Int. Cl.: B60C 17/06

(54) **Verspannbarer Notlaufeinsatz**

(71) Anmelder: Europlast-Nycast GmbH, 40882 Ratingen-Homberg (DE)
(72) Erfinder: Seelig, Hans-Georg, 45149 Essen (DE); Orth, Michael, 45481 Mülheim an der Ruhr (DE)
(74) Vertreter: DR. STARK & PARTNER

(57) **Zusammenfassung**

Die Erfindung betrifft einen verspannbaren Notlaufeinsatz (9) für ein Kraftfahrzeugrad, mit mehreren kreisringsegmentförmigen Teilelementen, die entweder gelenkig miteinander verbunden oder über ein Spannsystem miteinander verspannbar sind. Um einen verspannbaren Notlaufeinsatz (9) anzugeben, mit dem auch in einer Notlaufsituation bei einem defekten - und damit nicht mehr mit entsprechenden Luftdruck versehenen - Reifen eine Antriebsübertragung sichergestellt ist, soll der Querschnitt der Teilelemente reifenseitig T-förmig sein, wobei der Querbalken (5) der T-förmigen Ausgestaltung als Lauffläche für den Reifen dient und der Querschnitt der Teilelemente felgenseitig eine konkave Form (6) mit seitlichen Endpunkten (7) aufweist, die zur Montage auf dem Felgenbett (8) dienen und in montiertem Zustand auf diesem aufliegen, wobei die T-förmige Ausgestaltung (5) und die konkave Form (6) miteinander verbunden sind, wobei das Material der Teilelemente zumindest im Bereich der konkaven Form (6) eine derartige Elastizität aufweist, dass bei einer bei einem defekten Reifen radial von außen auf die T-förmige Ausgestaltung (5) wirkende Last eine Verformung der der Felge (8) zugewandten konkaven Form (6) unter Reduzierung der Höhe A der konkaven Form (6) und unter Verbreiterung des Abstandes B zwischen den zwei seitlichen Endpunkten (7) der konkaven Form resultiert.

## Beschreibung

Die Erfindung betrifft einen verspannbaren Notlaufeinsatz für ein aus einer Felge und einem darauf angeordneten luftgefüllten Reifen bestehendes Kraftfahrzeugrad, mit wenigstens zwei, insbesondere drei, kreisringsegmentförmigen Teilelementen, wobei aneinandergrenzende Teilelemente jeweils entweder gelenkig miteinander verbunden sind oder über ein Spannsystem miteinander verspannbar sind. Dabei können die Teilelemente jeweils entweder gelenkig miteinander verbunden, auch können die Teilelemente jeweils über ein Spannsystem miteinander verspannbar sein. Vorzugsweise sind zwei Teilelemente miteinander über ein Spannsystem verspannbar, wohingegen ansonsten die Teilelemente jeweils gelenkig miteinander verbunden sind.

Aus der Praxis sind verspannbare Notlaufeinsätze in verschiedenen Ausführungen bekannt. Dabei wird durch den Luftinnendruck des Reifens dieser mit seinen beiden Reifenwülsten gegen die Felgenschulter bzw. -Auflagefläche gedrückt. Durch den hieraus resultierenden Klemm- und Reibschluss erfolgt die Übertragung der Antriebskraft von der angetriebenen Felge auf den Reifen.

In einer Notlaufsituation bei einem defekten - und damit nicht mehr mit entsprechenden Luftdruck versehenen - Reifen fehlt diese Anpressung, und somit auch die hieraus resultierende Antriebsübertragung. Die Folge ist ein Durchdrehen der Felge bei dem entsprechenden Rad.

Ziel der Erfindung ist es, die vorstehend beschriebene Aufhebung oder zumindest Reduzierung der Antriebskraft-Übertragung bei einer Notlaufsituation zu verringern bzw. zu minimieren.

Die aus der Praxis bekannten Notlaufeinsätze sind durch den Werkstoff, evtl. Einlagen sowie durch die Formgebung und Dimensionierung, so ausgebildet, dass durch die Belastung im Notfall keine Verformung des Systems auftritt. Da gleichzeitig aus Gründen der Toleranz der Reifenwulstdicke sowie Fertigungstoleranz der Teilelemente als auch notwendigem Spiel für den Montageablauf, ein mehr oder minder großer Spalt zwischen der Reifenwulst und dem jeweiligen Teilelement entsteht, löst sich im Notfall die Reifenwulst etwas von der Felgenschulter und der konischen Felgensitzfläche für die Wulst ab.

Aufgabe der Erfindung ist es, die vorgenannten Nachteile zu vermeiden und einen verspannbaren Notlaufeinsatz anzugeben, mit dem auch in einer Notlaufsituation bei einem defekten - und damit nicht mehr mit entsprechenden Luftdruck versehenen - Reifen eine Antriebsübertragung sichergestellt ist.

Diese Aufgabe wird dadurch gelöst, dass der Querschnitt der Teilelemente reifenseitig T-förmig ausgebildet ist, wobei der Querbalken der T-förmigen Ausgestaltung als Lauffläche für den Reifen bei einem Reifendefekt dient und der Querschnitt der Teilelemente felgenseitig eine der Felge zugewandte konkave Form mit zwei seitlichen Endpunkten aufweist, die zur Montage auf dem Felgenbett dienen und in montiertem Zustand auf diesem aufliegen, wobei die T-förmige Ausgestaltung und die konkave Form, insbesondere über einen radial verlaufenden Steg, miteinander verbunden sind, wobei das Material der Teilelemente zumindest im Bereich der konkaven Form eine derartige Elastizität aufweist, dass bei einer im Falle eines defekten Reifens radial von außen auf die T-förmige Ausgestaltung wirkende Last eine Verformung der der Felge zugewandten konkaven Form unter Reduzierung der Höhe der konkaven Form und unter Verbreiterung des Abstandes zwischen den zwei seitlichen Endpunkten der konkaven Form resultiert. Somit kann bei einem üblichen Spalt zwischen der Reifenwulst und dem entsprechenden Endpunkt des Teilelementes dieser durch die Verformung der T-förmigen Ausgestaltung verringert bzw. geschlossen werden.

Vorzugsweise können die Teilelemente aus einem Gussmaterial, insbesondere aus Kunststoff und/oder aus einem Kompositwerkstoff, bestehen. Somit ist eine unterschiedliche Elastizität der Teilelemente an verschiedenen Stellen durch Vergießen oder Verbinden verschiedener Materialien mit unterschiedlichen Eigenschaften leicht erzielbar.

Vorteilhafterweise kann das Material der Teilelemente nur ein geringes Rückstellvermögen haben, so dass die bei der Erstbelastung erfahrene Verformung, und damit auch die Anpressung an die Reifenwülste, möglichst beibehalten wird.

Bei einem bevorzugten Ausführungsbeispiel der Erfindung kann das Material der Teilelemente ein Zug-E-Modul von 1000 bis 2000, insbesondere von ca. 1512 MPa, haben und/oder das Material der Teilelemente kann eine Bruchdehnung von 100 bis 400, insbesondere von ca. 270 %, aufweisen und/oder das Material der Teilelemente kann eine Bruchfestigkeit von 20 bis 60, insbesondere von ca. 47 MPa, aufweisen und/oder das Material der Teilelemente kann eine Härte von ca. 50 bis 80, insbesondere von ca. 74 Shore D, haben.

Bei dem Material kann es sich um ein elastomermodifiziertes Gusspolyamid handeln. Dies ist ein teilkristalliner, amorpher, elastomermodifizierter thermoplastischer Werkstoff.

Erfindungsgemäß kann die im Falle eines defekten Reifens aufgrund der radial von außen auf die T-förmige Ausgestaltung wirkende Last erfolgende Reduzierung der Höhe der konkaven Form ca. 1 bis 10 mm, insbesondere 1 bis 5 mm und vorzugsweise 1 bis 3 mm betragen, und/oder die im Falle eines defekten Reifens aufgrund der radial von außen auf die T-förmige Ausgestaltung wirkende Last erfolgende Verbreiterung des Abstandes zwischen den zwei seitlichen Endpunkten der konkaven Form ca. 1 bis 10 mm, insbesondere 1 bis 5 mm und vorzugsweise 1 bis 3 mm betragen, so dass in der Praxis übliche Spaltbreiten sicher geschlossen werden und der Spalt damit verschwunden ist.

Die Erfindung betrifft weiterhin ein Kraftfahrzeugrad mit einer Felge, mit einem luftgefüllten Reifen, der beidseitig jeweils eine Reifenwulst hat und mit diesen beiden Reifenwülsten auf der Felge angeordnet ist, und mit einem innerhalb des Reifens auf der Felge angeordneten verspannbaren Notlaufeinsatz.

Zur Lösung der eingangs genannten Aufgabe soll der Notlaufeinsatz erfindungsgemäß ausgebildet sein. Dabei kann die Felge eine mehrteilige Flachbettfelge sein.

Erfindungsgemäß kann zwischen jeder Reifenwulst einerseits und dem entsprechenden seitlichen Endpunkt der konkaven Form der Teilelemente andererseits bei unbelasteten Zustand des jeweiligen Teilelementes ein Spalt vorhanden sein, der in belastetem Zustand zumindest in dem entsprechenden belasteten Bereich dieses Teilelementes verringert ist, insbesondere vollständig verschlossen und damit verschwunden ist.

Vorzugsweise kann die Breite zumindest eines Spaltes, insbesondere die jeweilige Breite von beiden Spalten, bei unbelastetem Zustand des jeweiligen Teilelementes jeweils ca. 1 bis 10 mm, insbesondere 1 bis 5 mm und vorzugsweise 1 bis 3 mm betragen.

Im Folgenden wird ein in den Zeichnungen dargestelltes Ausführungsbeispiel der Erfindung erläutert. Es zeigen:
- Fig. 1: ein erfindungsgemäßes, nicht rotierendes Kraftfahrzeugrad im Schnitt,
- Fig. 2: eine Detailansicht "X" des Gegenstandes nach Fig. 1 und
- Fig. 3a+b: eine Gegenüberstellung der Detailansicht "X" des Gegenstandes nach Fig. 1 in zwei unterschiedlichen Zuständen.

In allen Figuren werden für gleiche bzw. gleichartige Bauteile übereinstimmende Bezugszeichen verwendet.

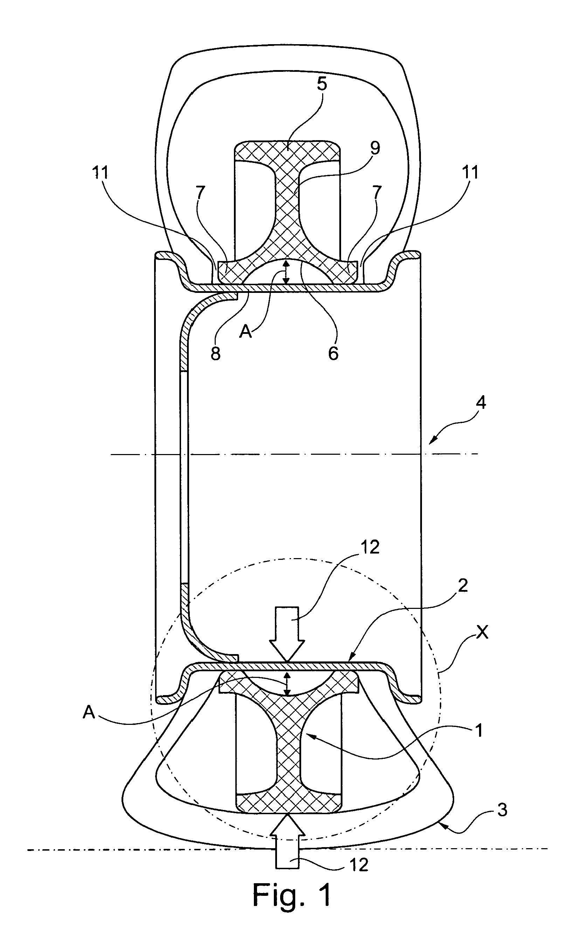

Fig. 1 zeigt einen verspannbaren Notlaufeinsatz 1 für ein aus einer Felge 2 und einem darauf angeordneten luftgefüllten Reifen 3 bestehendes Kraftfahrzeugrad 4. Der Reifen 3 des Kraftfahrzeugrades 4 ist, wie nachfolgend noch erläutert werden wird, in einem defekten Zustand.

Der Notlaufeinsatz 1 umfasst mehrere kreisringsegmentförmige Teilelemente.

Der Querschnitt der Teilelemente ist reifenseitig T-förmig ausgebildet, wobei der Querbalken 5 der T-förmigen Ausgestaltung als Lauffläche für den Reifen 3 bei einem Reifendefekt dient. Weiterhin weist der Querschnitt der Teilelemente felgenseitig eine der Felge 2 zugewandte konkave Form 6 mit zwei seitlichen Endpunkten 7 auf, wobei die Endpunkte 7 zur Montage auf dem Felgenbett 8 dienen und in montiertem Zustand auf diesem aufliegen.

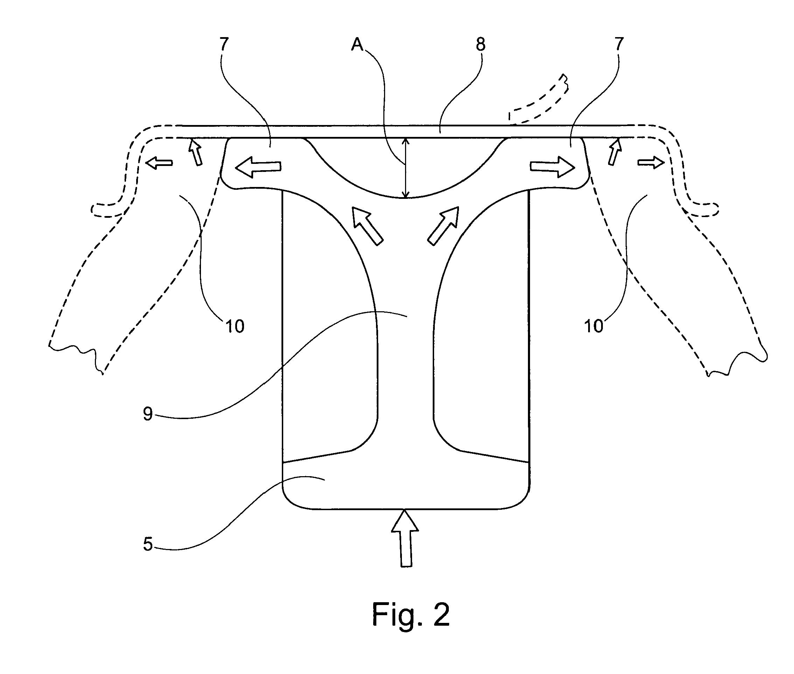

Die T-förmige Ausgestaltung und die konkave Form 6 sind über einen radial verlaufenden Steg 9 miteinander verbunden, wobei das Material der Teilelemente zumindest im Bereich der konkaven Form 6 eine derartige Elastizität aufweist, dass bei einer im Falle eines defekten Reifens 3 radial von außen auf die T-förmige Ausgestaltung wirkende Last 12 eine Verformung der der Felge 2 zugewandten konkaven Form 6 unter Reduzierung der Höhe A der konkaven Form 6 und unter Verbreiterung des Abstandes B zwischen den zwei seitlichen Endpunkten 7 der konkaven Form 6 resultiert. Dies ist beispielsweise in Fig. 2 durch entsprechende Pfeile innerhalb des Materials des Teilelementes des Notlaufeinsatzes 1 visualisiert.

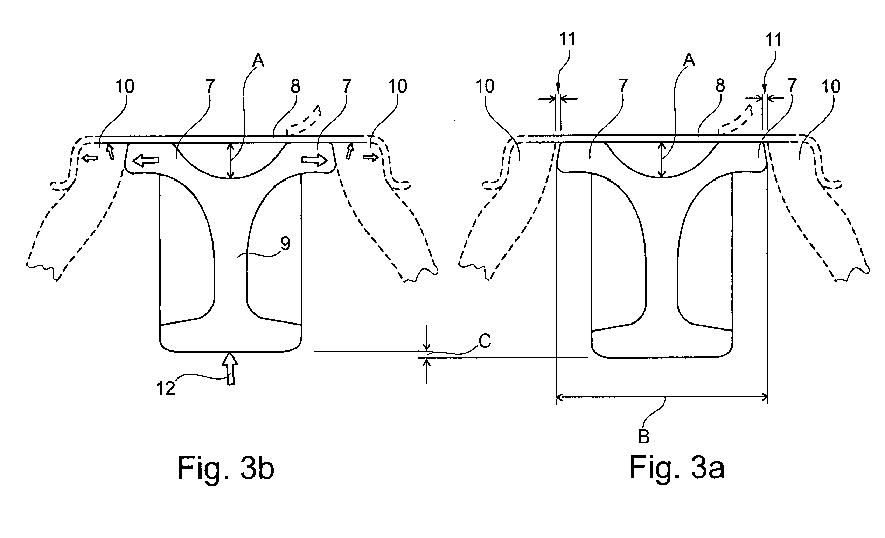

Bei einem unbeschädigten Reifen 3 ist jede Reifenwulst 10, sowie es beispielsweise in Fig. 3a dargestellt ist, von dem angrenzenden jeweiligen Endpunkt 7 des Teilelementes unter Bildung eines Spaltes 11 beabstandet.

Kommt es nun zu einem Defekt des Reifens 3, wirkt eine Kraft (Last 12) radial von außen auf die T-förmige Ausgestaltung. Hierdurch wird der übliche Spalt 11 zwischen der Reifenwulst 10 und dem jeweiligen Endpunkt 7 des Teilelementes durch die Verformung der T-förmigen Ausgestaltung verringert bzw. geschlossen. Dadurch wird die Reifenwulst 10 gegen die seitliche Begrenzung der Felge 2 gedrückt.

Bei dem in den Figuren dargestellten Ausführungsbeispiel ist der Verlauf der konkaven Form 6 als Teil einer Kreislinie ausgebildet. Es sind aber auch andere beliebige Ausgestaltungen möglich. Gleiches gilt auch für den Übergangsbereich vom Steg 9 zu den Endpunkten 7, die ebenfalls gut gerundet dargestellt sind, jedoch auch deutlich abweichend verlaufen können.

In den Fig. 3a und 3b ist das Detail "X" aus Fig. 1 dargestellt. Fig. 3a zeigt die der Felge 2 zugewandte konkave Form 6 mit den zwei seitlichen Endpunkten 7 bei nicht beschädigtem Reifen 3. Deutlich erkennbar ist, dass die konkave Form 6 als Teil einer Kreislinie ausgebildet ist. Der Wendepunkt der Kreislinie ist in einer Höhe A zu dem Felgenbett 8 angeordnet. Jeder der beiden Endpunkte 7 berührt die jeweils benachbarte Reifenwulst 10 nicht. Vielmehr ist zwischen jedem Endpunkt 7 und der benachbarten Reifenwulst 10 ein Spalt 11 vorgesehen.

Kommt es zu einem Defekt des Reifens 3, sowie es in Fig. 1 unten und in Fig. 3b dargestellt ist, wirkt eine Radlast, die durch den Pfeil 12 angedeutet ist, auf den Notlaufeinsatz 1. Infolgedessen verformt sich die der Felge 2 zugewandte konkave Form 6 unter Reduzierung der Höhe A um den Betrag C. Dadurch verbreitert sich der Abstand B zwischen den zwei seitlichen Endpunkten 7 der konkaven Form 6. Dadurch verschwinden die Spalte 11, so wie es in Fig. 1 unten und in Fig. 3b dargestellt ist, vollständig.

## Patentansprüche

1. Verspannbarer Notlaufeinsatz (1) für ein aus einer Felge (2) und einem darauf angeordneten luftgefüllten Reifen (3) bestehendes Kraftfahrzeugrad (4), mit wenigstens zwei, insbesondere drei, kreisringsegmentförmigen Teilelementen, wobei aneinandergrenzende Teilelemente jeweils entweder gelenkig miteinander verbunden sind oder über ein Spannsystem miteinander verspannbar sind, **dadurch gekennzeichnet, dass** der Querschnitt der Teilelemente reifenseitig T-förmig ausgebildet ist, wobei der Querbalken (5) der T-förmigen Ausgestaltung als Lauffläche für den Reifen (3) bei einem Reifendefekt dient und der Querschnitt der Teilelemente felgenseitig eine der Felge (2) zugewandt konkave Form (6) mit zwei seitlichen Endpunkten (7) aufweist, die zur Montage auf dem Felgenbett (8) dienen und in montiertem Zustand auf diesem aufliegen, wobei die T-förmige Ausgestaltung und die konkave Form (6), insbesondere über einen radial verlaufenden Steg (9), miteinander verbunden sind, wobei das Material der Teilelemente zumindest im Bereich der konkaven Form (6) eine derartige Elastizität aufweist, dass bei einer im Falle eines defekten Reifens (3) radial von außen auf die T-förmige Ausgestaltung wirkende Last eine Verformung der der Felge (2) zugewandte konkaven Form (6) unter Reduzierung der Höhe A der konkaven Form (6) und unter Verbreiterung des Abstandes B zwischen den zwei seitlichen Endpunkten (7) der konkaven Form (6) resultiert.

2. Verspannbarer Notlaufeinsatz (1) nach dem vorhergehenden Anspruch, **dadurch gekennzeichnet, dass** die Teilelemente aus einem Gussmaterial, insbesondere aus Kunststoff und/oder aus einem Kompositwerkstoff, bestehen.

3. Verspannbarer Notlaufeinsatz (1) nach einem der vorhergehenden Ansprüche, **dadurch gekennzeichnet, dass** das Material der Teilelemente nur ein geringes Rückstellvermögen hat.

4. Verspannbarer Notlaufeinsatz (1) nach einem der vorhergehenden Ansprüche, **dadurch gekennzeichnet, dass** das Material der Teilelemente ein Zug-E-Modul von 1000 bis 2000 MPa, insbesondere von ca. 1512 MPa, hat.

5. Verspannbarer Notlaufeinsatz (1) nach einem der vorhergehenden Ansprüche, **dadurch gekennzeichnet, dass** das Material der Teilelemente eine Bruchdehnung von 100 bis 400 %, insbesondere von ca. 270 %, aufweist.

6. Verspannbarer Notlaufeinsatz (1) nach einem der vorhergehenden Ansprüche, **dadurch gekennzeichnet, dass** das Material der Teilelemente eine Bruchfestigkeit von 20 bis 60 MPa, insbesondere von ca. 47 MPa, aufweist.

7. Verspannbarer Notlaufeinsatz (1) nach einem der vorhergehenden Ansprüche, **dadurch gekennzeichnet, dass** das Material der Teilelemente eine Härte von ca. 50 bis 80 Shore D, insbesondere von ca. 74 Shore D, hat.

8. Verspannbarer Notlaufeinsatz (1) nach einem der vorhergehenden Ansprüche, **dadurch gekennzeichnet, dass** die im Falle eines defekten Reifens (3) aufgrund der radial von außen auf die T-förmige Ausgestaltung wirkenden Last erfolgende Reduzierung der Höhe A der konkaven Form (6) ca. 1 bis 10 mm, insbesondere 1 bis 5 mm und vorzugsweise 1 bis 3 mm, beträgt.

9. Verspannbarer Notlaufeinsatz (1) nach einem der vorhergehenden Ansprüche, **dadurch gekennzeichnet, dass** die im Falle eines defekten Reifens (3) aufgrund der radial von außen auf die T-förmige Ausgestaltung wirkende Last 12 erfolgende Verbreiterung des Abstandes B zwischen den zwei seitlichen Endpunkten (7) der konkaven Form (6) ca. 1 bis 10 mm, insbesondere 1 bis 5 mm und vorzugsweise 1 bis 3 mm, beträgt.

10. Kraftfahrzeugrad (4) mit einer Felge (2), mit einem luftgefüllten Reifen (3), der beidseitig jeweils eine Reifenwulst (10) hat und mit diesen beiden Reifenwülsten (10) auf der Felge (2) angeordnet ist, und mit einem innerhalb des Reifens (3) auf der Felge (2) angeordneten verspannbaren Notlaufeinsatz (1), **dadurch gekennzeichnet, dass** der Notlaufeinsatz (1) nach einem der vorhergehenden Ansprüche ausgebildet ist.

11. Kraftfahrzeugrad (4) nach Anspruch 10, **dadurch gekennzeichnet, dass** die Felge (2) eine mehrteilige Flachbettfelge ist.

12. Kraftfahrzeugrad (4) nach dem vorhergehenden Anspruch, **dadurch gekennzeichnet, dass** zwischen jeder Reifenwulst (10) einerseits und dem entsprechenden seitlichen Endpunkt (7) der konkaven Form (6) der Teilelemente andererseits bei unbelasteten Zustand des jeweiligen Teilelementes ein Spalt (11) vorhanden ist, der in belastetem Zustand zumindest in dem entsprechenden belasteten Bereich dieses Teilelementes verringert ist, insbesondere vollständig verschwunden ist.

13. Kraftfahrzeugrad (4) nach dem vorhergehenden Anspruch, **dadurch gekennzeichnet, dass** die Breite zumindest eines Spaltes (11), insbesondere beider Spalte (11), bei unbelastetem Zustand des jeweiligen Teilelementes jeweils ca. 1 bis 10 mm, insbesondere 1 bis 5 mm und vorzugsweise 1 bis 3 mm, beträgt.
